# EUROPÄISCHE PATENTSCHRIFT

(11) **EP 3 322 619 B1**
(45) Veröffentlichungstag und Bekanntmachung des Hinweises auf die Patenterteilung: **02.12.2020**
(21) Anmeldenummer: 16729787.8
(22) Anmeldetag: 17.06.2016
(51) Int. Cl.: B60T 8/1755

(54) **VERFAHREN UND VORRICHTUNG ZUM ELEKTRONISCHEN REGELN EINER FAHRZEUGVERZÖGERUNG EINES BREMSSCHLUPFGEREGELTEN FAHRZEUGES**
METHOD AND DEVICE FOR ELECTRONIC CONTROL OF A VEHICLE DECELERATION OF A BRAKE SLIP-CONTROLLED VEHICLE
PROCÉDÉ ET DISPOSITIF DE RÉGULATION ÉLECTRONIQUE D'UN RALENTISSEMENT D'UN VÉHICULE À RÉGULATION DU GLISSEMENT DE FREINAGE

(30) Priorität: 14.07.2015 DE 102015009160
(43) Veröffentlichungstag der Anmeldung: 23.05.2018
(73) Patentinhaber: WABCO GmbH, 30453 Hannover (DE)
(72) Erfinder: ECKERT, Horst, 31547 Rehburg-Loccum (DE); SCHWAGMEYER, Florian, 31700 Heuerßen (DE)
(86) Internationale Anmeldenummer: PCT/EP2016/001036
(87) Internationale Veröffentlichungsnummer: WO 2017/008879

(56) Entgegenhaltungen:
- WO-A1-2008/114039
- US-A- 5 769 510
- US-A1- 2006 163 940

## Beschreibung

Die Erfindung betrifft ein Verfahren zum elektronischen Regeln einer Fahrzeugverzögerung während eines Regelungseingriffes eines Antiblockiersystems (ABS) an mindestens einem Rad des Fahrzeuges, sowie eine Vorrichtung zur Durchführung des Verfahrens.

In Fahrzeugen, insbesondere Nutzfahrzeugen kann ein Antiblockiersystem (ABS) neben einem oder mehreren weiteren Fahrerassistenzsystemen wie beispielsweise einem elektronischen Stabilitätsprogramm (ESP), einer Abstandsregelung (ACC), einer Umkipp-Verhinderung (RSC) oder einem Notbremssystem (AEBS) als Teil eines elektronischen Bremssystems (EBS) vorgesehen sein. Wird bei einer beliebigen Bremsung erkannt, dass an mindestens einem der abbremsbaren Räder des Fahrzeuges ein zu hoher Bremsschlupf, d.h. ein Bremsschlupf, der größer als ein Soll-Bremsschlupf ist, vorliegt, veranlasst das ABS einen Bremsdruck an einer Radbremse dieses Rades zu halten oder zu verringern, um einem Blockieren dieses Rades entgegenzuwirken. Das bremsschlupfgeregelte Rad trägt dadurch weniger zur Bremsung des Fahrzeuges bei, wodurch sich eine Fahrzeug-Ist-Verzögerung, d.h. die aktuelle negative Beschleunigung des Fahrzeuges, verringert; eine Fahrzeug-Soll-Verzögerung, die neben dem ABS von mindestens einem weiteren Fahrerassistenzsystem im Fahrzeug angefordert werden kann, kann somit nicht mehr (mit Sicherheit) erreicht werden.

Die Umkipp-Verhinderung (Roll Stability Control, RSC) als eines der Fahrerassistenz- bzw. Stabilitätskontrollsysteme dient insbesondere dazu, während einer Kurvenfahrt ein Kippen des Fahrzeuges verhindern zu können. In derartigen Systemen wird beispielsweise die laterale Beschleunigung, d.h. die Querbeschleunigung des Fahrzeuges sowie der Schwerpunkt und die Raddrehgeschwindigkeiten der Räder überwacht und bei einer Überschreitung beispielsweise eines Querbeschleunigungs-Grenzwertes entsprechend in die Ansteuerung des Motors sowie der Radbremsen eingegriffen. Dadurch kann das Fahrzeug in fahrkritischen Situationen insbesondere in einer Kurve stabilisiert werden.

Die DE 10 2004 035 579 A1 beschreibt dazu ein Verfahren zur Kippstabilisierung eines Fahrzeuges während einer Kurvenfahrt, wobei vorgesehen ist, eine Kippgrenze des Fahrzeuges insbesondere in Abhängigkeit einer Beladung des Fahrzeuges, einer Gierrate, einer Fahrgeschwindigkeit sowie von Drehzahlen der kurveninneren und kurvenäußeren Räder zu ermitteln.

Zum Einstellen der Bremsdrücke an den Radbremsen des Fahrzeuges können beide Systeme - ABS und RSC - auch miteinander verknüpft werden. Die DE 40 10 332 C2 offenbart dazu ein Verfahren zur Lenkungs- und Bremsregelung, wobei vorgesehen ist, bei Überschreitung eines Grenzwertes für die Querbeschleunigung oder die Giergeschwindigkeit insbesondere den Bremsdruck für die der Richtung des Gierens oder der Querbeschleunigung entsprechenden Fahrzeugseite zu verringern und den Bremsdruck an der gegenüberliegenden Fahrzeugseite zu erhöhen. Dabei kann bei vorhandener Antiblockier-Regelung zusätzlich der Soll-Bremsschlupf der Räder berücksichtig werden oder der Soll-Bremsschlupf an einzelnen Rädern entsprechend angepasst werden, um den Grenzwert der Querbeschleunigung bzw. der Giergeschwindigkeit nicht zu überschreiten.

Die DE 40 18 495 A1 offenbart weiterhin eine Vorrichtung zum Regeln eines zur Übersteuerung neigenden Fahrzeuges. Demnach werden während einer Kurvenfahrt für den Fall, dass ein kurveninneres Vorderrad bremsschlupfgeregelt wird, d.h. dazu neigt zu blockieren, Grenzwerte für einen Bremsschlupf sowie eine Verzögerung für ein kurvenäußeres Vorderrad erhöht, so dass ein an diesem kurvenäußeren Vorderrad wirkendes Bremsmoment weiter erhöht werden kann. Dadurch kann eine Übersteuerungstendenz verringert werden.

Die US5,769,510A beschreibt ein Verfahren zum Steuern von Radlängskräften, die an eine Mehrzahl von Rädern eines Fahrzeugs zumindest an einer Vorderradseite und an einer Hinterradseite angelegt werden, umfassend die Schritte:
- Erfassen oder Ermitteln einer Gesamtlängskraft, die eine Gesamtsumme der an die Mehrzahl von Rädern angelegten Längskräfte ist;
- Steuern der an die Rader angelegten Längskräfte auf der Basis einer vorderradseitigen Soll-Radlängskraft und einer hinterradseitigen Soll-Radlängskraft, die durch eine Verteilung der Gesamtlängskraft auf zumindest die Vorderseite und die Ruckseite des Fahrzeugs mit einer vorbestimmten Verteilungsproportion bestimmt werden; und
- Ändern der Verteilungsproportion derart, dass die Soll-Radlängskraft an derjenigen der Vorder- und Hinterradseite größer wird, an der mehr Räder nicht schlupfen als an der anderen Seite, wenn ein Schlupf der Räder erfasst wird, wobei beim Ändern der Verteilungsproportion der Zunahmebetrag in der Verteilungsproportion dann, wenn die vorderradseitige Soll-Radlängskraft erhöht wird, größer festgelegt wird als der Zunahmebetrag in der Verteilungsproportion dann, wenn die hinterradseitige Soll-Radlängskraft erhöht wird.

Nachteilig dabei ist, dass zum Erreichen einer angeforderten Bremswirkung das bremsschlupfgeregelte, kurveninnere Vorderrad weniger beiträgt und diese fehlende Bremswirkung nicht zuverlässig lediglich durch das kurvenäußere Vorderrad geleistet werden kann. Wird das Fahrzeug dadurch nicht schnell genug abgebremst, kann es zu einem Kippen des Fahrzeuges kommen. Zudem kann es durch das zusätzliche Abbremsen bzw. das Erhöhen der Grenzwerte lediglich eines Rades zu einem Verlust der Stabilität während einer Kurvenfahrt kommen, da die Erhöhung der Bremswirkung auf lediglich ein Rad konzentriert wird.

Es ist daher Aufgabe der Erfindung, ein Verfahren und eine Vorrichtung zum elektronischen Regeln einer Fahrzeugverzögerung eines bremsschlupfgeregelten Fahrzeuges bereitzustellen, die eine sichere und zuverlässige Bremsung des Fahrzeuges gewährleisten.

Diese Aufgabe wird durch ein Verfahren nach Anspruch 1 sowie eine Vorrichtung zur Durchführung des Verfahrens nach Anspruch 16 gelöst. Bevorzugte Weiterbildungen sind in den Unteransprüchen angegeben.

Erfindungsgemäß ist demnach vorgesehen, in einem Fahrzeug zu überwachen, ob mindestens eines der abbremsbaren Räder durch ein Antiblockiersystem (ABS) bremsschlupfgeregelt wird, wobei in diesem Fall Bremsdrücke an Radbremsen aller anderen nicht-bremsschlupfgeregelten Räder angepasst werden, um eine durch das mindestens eine bremsschlupfgeregelte Rad reduzierte Bremswirkung auszugleichen.

Dadurch kann bereits der Vorteil erreicht werden, dass eine angeforderte Fahrzeug-Soll-Verzögerung, die vorzugsweise von einem beliebigen Fahrerassistenzsystem - außer dem ABS - bzw. Stabilitätskontrollsystem im Fahrzeug angefordert wird, auch dann erreicht werden kann, wenn mindestens eines der Räder durch das ABS bremsschlupfgeregelt wird und dadurch weniger zum Erreichen der Fahrzeug-Soll-Verzögerung beiträgt, als von dem Fahrerassistenzsystem bzw. Stabilitätskontrollsystem im Fahrzeug angefordert wurde. Denn die aktive ABS-Regelung bewirkt, dass der Bremsdruck an dem zum Schlüpfen bzw. Blockieren neigenden Rad gehalten bzw. verringert wird, um die Blockierneigung dieses Rades wieder zu reduzieren. Dadurch wird eine aktuelle Fahrzeug-Ist-Verzögerung, d.h. eine negative Beschleunigung des Fahrzeuges in einer Längsrichtung bzw. in Fahrtrichtung tendenziell verringert; d.h. die Fahrzeug-Ist-Verzögerung ist geringer als die angeforderte Fahrzeug-Soll-Verzögerung.

Die somit fehlende Bremswirkung kann vorteilhafterweise durch die erfindungsgemäße Anpassung der Bremsdrücke an den Radbremsen aller anderen nicht-bremsschlupfgeregelten Räder des Fahrzeuges ausgeglichen werden. Vorzugsweise ist dabei vorgesehen, dass ein Summenbremsdruck, der sich aus der Summe der an allen Radbremsen des Fahrzeuges anliegenden Bremsdrücke ergibt, bei aktiver Bremsschlupfregelung in etwa gleich dem Summenbremsdruck ohne aktiver Bremsschlupfregelung ist. D.h. es findet lediglich eine Umverteilung der Bremsdrücke statt, um die angeforderte Fahrzeug-Soll-Verzögerung zu erreichen und somit die fehlende Bremswirkung auszugleichen.

Gemäß einer alternativen Ausführungsform kann anstelle eines Summenbremsdruckes ein Summenbremsmoment oder auch eine Summenbremskraft überwacht werden. D.h. die Bremsdrücke an den Radbremsen aller anderen nicht-bremsschlupfgeregelten Räder des Fahrzeuges werden derartig angepasst, dass das sich daraus ergebende Summenbremsmoment bzw. die Summenbremskraft bei aktiver Bremsschlupfregelung in etwa gleich den Werten ohne aktive Bremsschlupfregelung entspricht. Auch dadurch kann vorteilhafterweise eine durch die aktive ABS-Regelung verminderte Bremswirkung ausgeglichen werden.

Die angeforderte Bremswirkung, die durch die Fahrzeug-Soll-Verzögerung vorgegeben wird, kann somit entweder durch einen Summenbremsdruck, ein Summenbremsmoment oder eine Summenbremskraft charakterisiert werden, die sich aus der Summe der Bremsdrücke, der Bremsmomente bzw. der Bremskräfte der einzelnen Radbremsen bzw. Räder des Fahrzeuges ergeben. Das Bremsmoment bzw. die Bremskraft kann hierbei aus dem angeforderten Bremsdruck insbesondere unter Berücksichtigung einer Bremszylindergröße der entsprechenden Radbremse hergeleitet werden.

Erfindungsgemäß ist somit das Erreichen der Fahrzeug-Soll-Verzögerung wichtiger als das Risiko, durch das im Rahmen der Anpassung durchgeführte, beispielsweise Erhöhen der Bremsdrücke an den nicht-bremsschlupfgeregelten bzw. nicht zum Blockieren neigenden Rädern ein Blockieren zu verursachen. Dadurch, dass nicht lediglich die Radbremsen eines Rades, sondern die Radbremsen aller nicht-bremsschlupfgeregelten Räder angesteuert werden, wird die fehlende Bremswirkung zudem gleichmäßig verteilt, was zur Stabilität des Fahrzeuges beiträgt.

Vorteilhafterweise kann das Verfahren auch während einer Bremsung in einer Kurvenfahrt durchgeführt werden, wobei aufgrund von dynamischen Achslast- und achsbezogenen Radlastverlagerungen in einer Kurvenfahrt die kurveninneren Räder eher dazu neigen, zu schlüpfen. Denn das Gewicht des Fahrzeuges verlagert sich bei einer Kurvenfahrt auf die kurvenäußeren Räder; die kurveninneren Räder hingegen werden weniger stark auf die Fahrbahn gedrückt. Somit wird während einer Bremsung in einer Kurve vorzugsweise zusätzlich überwacht, ob ein oder mehrere kurveninnere Räder durch das ABS bremsschlupfgeregelt werden, d.h. einen Bremsschlupf aufweisen, der oberhalb eines Soll-Bremsschlupfes liegt, d.h. das ABS an diesen zum Blockieren neigenden, kurveninneren Rädern aktiv wird. In diesem Fall werden durch das erfindungsgemäße Verfahren die Bremsdrücke an den Radbremsen aller anderen - kurvenäußeren und kurveninneren - nicht-bremsschlupfgeregelten Räder des Fahrzeuges angepasst.

Somit kann sichergestellt werden, dass die angeforderte Bremswirkung auch während einer Kurvenfahrt erreicht werden kann, wodurch das Fahrzeug insgesamt stabiler wird, da es in der Kurve entsprechend der Anforderung verlangsamt wird und somit weniger dazu neigt, zu kippen, insbesondere dann, wenn die angeforderte Bremswirkung bzw. die angeforderte Fahrzeug-Soll-Verzögerung von einer Umkipp-Verhinderung (Roll Stability Control, RSC) bereitgestellt wird, die die Umkippwahrscheinlichkeit während einer Kurvenfahrt bewertet und in Abhängigkeit davon eine Fahrzeug-Soll-Verzögerung vorgibt.

Dadurch wird vorteilhafterweise erkannt, dass zum Vermeiden eines Umkippens des Fahrzeuges das Erreichen der Fahrzeug-Soll-Verzögerung wichtiger ist als das Risiko, durch ein Anpassen bzw. Erhöhen der Bremsdrücke an nicht-bremsschlupfgeregelten bzw. nicht zum Blockieren neigenden Rädern ein Blockieren zu verursachen. Dies führt insgesamt zu einem sicheren Fahrverhalten, da ein Schlupffall an einer weiteren Fahrzeugachse bzw. einem weiteren Rad weniger bedenklich ist als ein kippendes Fahrzeug.

Die Fahrzeug-Soll-Verzögerung wird für das erfindungsgemäße Verfahren insbesondere durch ein oder mehrere beliebige elektronische Fahrerassistenzsysteme, beispielsweise durch ein Stabilitätsprogramm (ESP), eine Abstandsregelung (ACC), die Umkipp-Verhinderung (RSC) oder ein Notbremssystem (AEBS), die Teil eines elektronischen Bremssystems (EBS) sind, vorgegeben. Ergänzend kann, falls vorhanden, in die Fahrzeug-Soll-Verzögerung eine vom Fahrer vorgegebenen Bremsanforderung, z.B. durch das Drücken des Bremspedals einbezogen werden, wobei die Fahrzeug-Soll-Verzögerung dazu beispielsweise von einem Bremswertgeber erfasst werden kann, d.h. einem Wegsensor, der einen Betätigungsweg eines Bremsventils oder des Bremspedals durch den Fahrer erfasst, oder einen Drucksensor, der einen vom Fahrer mit einem Bremsventil ausgesteuerten Bremsdruck erfasst.

Zur Stabilisierung des Fahrzeuges bei einer Kurvenfahrt ist insbesondere die Umkipp-Verhinderung vorgesehen. Die Umkipp-Verhinderung wird von einer RSC-Steuereinrichtung gesteuert, wobei die RSC-Steuereinrichtung eine eventuelle vom Fahrer angeforderte Fahrzeug-Soll-Verzögerung verarbeitet und in Abhängigkeit von Parametern, wie z.B. einer lateralen Beschleunigung, d. h. einer Querbeschleunigung des Fahrzeuges, einem Schwerpunkt des Fahrzeuges sowie von Raddrehgeschwindigkeiten der Räder des Fahrzeuges, bewertet, ob das Fahrzeug während der Kurvenfahrt dazu neigt, umzukippen. Wird anhand dieser Parameter darauf geschlossen, dass die Wahrscheinlichkeit für ein Umkippen des Fahrzeuges zu hoch ist, beispielsweise ab einem bestimmten Querbeschleunigungs-Grenzwert, wird von der RSC-Steuereinrichtung eine Fahrzeug-Soll-Verzögerung ausgegeben, in Abhängigkeit derer regelnd in die Bremsansteuerung sowie die Motorsteuerung des Fahrzeuges eingegriffen wird; d.h. eine eventuell von dem Fahrer angeforderte Fahrzeug-Soll-Verzögerung wird beispielsweise auf einen Wert erhöht, bei dem die Wahrscheinlichkeit für ein Umkippen des Fahrzeuges wieder geringer wird, d.h. das Fahrzeug wird in dem Fall stärker als vom Fahrer angefordert verzögert. Liegt bei der Kurvenfahrt keine von dem Fahrer angeforderte Fahrzeug-Soll-Verzögerung vor, bestimmt die RSC-Steuereinrichtung allein aufgrund der vorliegenden Parameter eine Fahrzeug-Soll-Verzögerung, bei der die Wahrscheinlichkeit für ein Umkippen geringer ist.

In Abhängigkeit der angeforderten Fahrzeug-Soll-Verzögerung werden dann entsprechende Bremsdrücke, die eine bestimmte Bremskraft bzw. ein Bremsmoment an den Rädern verursachen, an den jeweiligen Radbremsen eingestellt, so dass sich eine Fahrzeug-Ist-Verzögerung entsprechend der angeforderten Fahrzeug-Soll-Verzögerung ergibt. Bei Erkennen einer aktiven Bremsschlupfregelung durch das ABS an mindestens einem der Räder werden erfindungsgemäß die eingestellten Bremsdrücke und somit die entsprechenden Bremsmomente bzw. Bremskräfte an den nicht-bremsschlupfgeregelten Rädern angepasst, um die Fahrzeug-Soll-Verzögerung wieder erfüllen zu können.

Das Anpassen der Bremsdrücke und somit der Bremsmomente bzw. der Bremskräfte, d.h. die Durchführung des erfindungsgemäßen Verfahrens, wird hierbei von einer erfindungsgemäßen Verzögerungs-Einrichtung durchgeführt und gesteuert. Diese ist ausgebildet, einen an den Radbremsen ausgesteuerten Bremsdruck und somit ein bestimmtes Bremsmoment bzw. eine Bremskraft in Abhängigkeit der insbesondere von dem jeweiligen Fahrerassistenzsystem angeforderten Fahrzeug-Soll-Verzögerung und der Anzahl der ABS-bremsschlupfgeregelten Räder vorzugeben, beispielsweise zu erhöhen. Vorzugsweise wird dieser vorgegebene Bremsdruck an den Radbremsen über eine ABS-Steuereinrichtung entsprechend eingestellt, wobei die ABS-Steuereinrichtung dazu insbesondere Ventile zum Bereitstellen eines erhöhten Bremsdruckes aus Vorratsbehältern sowie die ABS-Bremsventile, d.h. Auslassventile und Einlassventile, die vorzugsweise als 2/2-Magnetventile ausgeführt sind, ansteuert. Soll der Bremsdruck an den jeweiligen Radbremsen erhöht werden, wird demnach zunächst ein höherer Bremsdruck bereitgestellt und dieser durch entsprechendes Ansteuern der ABS-Bremsventile an die Radbremsen weitergegeben, beispielsweise durch ein getaktetes Ansteuern der Einlassventile bei geschlossenen Auslassventilen.

Die Verzögerungs-Einrichtung kann dabei entweder in der ABS-Steuereinrichtung beispielsweise auch als Software-Modul vorgesehen sein oder von extern beispielsweise über einen Datenbus die entsprechend auszusteuernden Bremsdrücke an die ABS-Steuereinrichtung vorgeben. Das Bremssystem ist dazu vorzugsweise ein hydraulisches oder ein pneumatisches Bremssystem, in dem ein Flüssigkeitsdruck oder ein Luftdruck bereitgestellt und ausgesteuert wird.

Vorteilhafterweise werden die Bremsdrücke an den Radbremsen der von dem ABS nicht-bremsschlupfgeregelten bzw. nicht zum Blockieren neigenden Räder, ausgehend von den aktuell ausgesteuerten, zur Bewirkung der Fahrzeug-Soll-Verzögerung eingestellten Bremsdrücken, die in Abhängigkeit unter anderem der Bremszylindergröße eine bestimmte Bremskraft bzw. ein Bremsmoment verursachen, um einen Faktor angepasst, um wieder den Summenbremsdruck oder das Summenbremsmoment oder die Summenbremskraft vor Aktivierung der ABS-Regelung zu erreichen. Demnach werden die an diesen Radbremsen ausgesteuerten Bremsdrücke oder Bremsmomente oder Bremskräfte, d.h. eine die von den Radbremsen verursachte Bremswirkung charakterisierende Größe, von der Verzögerungs-Einrichtung zunächst bestimmt, beispielsweise mithilfe von in einer EBS-Steuereinheit des elektronischen Bremssystems hinterlegten fahrzeugbezogenen Parametern, sowie einer Fahrzeug-Ist-Verzögerung geschätzt, und mit einem Faktor beispielsweise multipliziert. Der Faktor ist dabei insbesondere abhängig von der Anzahl der durch das ABS bremsschlupfgeregelten Räder des Fahrzeuges. Denn für den Fall, dass mehr als ein von dem ABS bremsschlupfgeregeltes Rad nicht mehr vollständig dazu beiträgt, mit der Fahrzeug-Ist-Verzögerung die angeforderte Fahrzeug-Soll-Verzögerung zu erreichen, müssen die anderen, nicht-bremsschlupfgeregelten Räder dies umso mehr ausgleichen; der Faktor erhöht sich in diesem Fall. Zum Bestimmen des Faktors wird der Summenbremsdruck oder das Summenbremsmoment oder die Summenbremskraft vor Aktivierung der ABS-Regelung herangezogen, der sich aus der Fahrzeug-Soll-Verzögerung insbesondere unter Berücksichtigung von Parametern wie einer Bremszylindergröße ergibt.

Der Faktor kann während der gebremsten Fahrt auch dynamisch angepasst werden, beispielsweise in Abhängigkeit davon, wie das Fahrzeug mit seiner Fahrzeug-Ist-Verzögerung in Bezug zur angeforderten Fahrzeug-Soll-Verzögerung auf die erfindungsgemäße Anpassung der Bremsdrücke bzw. Bremsmomente oder Bremskräfte reagiert. Dazu kann beispielsweise die Stabilität von einem ESP überwacht werden und in Abhängigkeit davon der Faktor für einzelne Räder angepasst werden.

Somit ist es auch möglich, Faktoren für jedes Rad individuell vorzugeben, um z.B. während einer Kurvenfahrt den Bremsdruck bzw. die Bremsmomente oder die Bremskräfte der kurvenäußeren Räder stärker zu erhöhen als den Bremsdruck bzw. die Bremsmomente oder die Bremskräfte der kurveninneren Räder. Dies kann beispielsweise in Abhängigkeit der Querbeschleunigung erfolgen, wobei vorteilhaferweise bereits vorausschauend beurteilt werden kann, ob insbesondere in Abhängigkeit der Querbeschleunigung oder der Bremsschlüpfe ein weiterer Bremsschlupfregelfall durch das ABS an einem der kurveninneren Räder droht, beispielsweise bei Überschreiten einer Toleranz für den Bremsschlupf. In dem Fall kann bereits vorsorglich der Faktor für die Radbremsen der nicht-bremsschlupfgeregelten kurveninneren Radbremsen niedriger gewählt und der Faktor an den kurvenäußeren Radbremsen erhöht werden, um vorteilhafterweise den drohenden weiteren Bremsschlupfregelfall durch das ABS verhindern oder hinauszögern zu können.

Dadurch steigt vorteilhafterweise die Sicherheit des Bremsvorganges, da die kurveninneren Räder bereits bei niedrigeren Bremsdrücken bzw. Bremsmomenten oder Bremskräften dazu neigen, zu schlüpfen. Somit kann durch die dynamische Umverteilung der Bremsdrücke bzw. Bremsmomente oder Bremskräfte die Fahrzeug-Soll-Verzögerung dennoch erreicht werden, ohne dabei die Stabilität des Fahrzeuges zu beeinträchtigen.

Aber auch bei einer Fahrt in Fahrzeuglängsrichtung kann durch Festlegen der Toleranz für den Bremsschlupf, die unterhalb des Soll-Bremsschlupfes liegt, die Anpassung der Bremsdrücke bzw. Bremsmomente oder Bremskräfte durch den Faktor geregelt werden, indem bei Überschreiten der Toleranz an einem der nicht-bremsschlupfgeregelten Räder der Faktor für dieses Rad niedriger gewählt wird als an den anderen nicht-bremsschlupfgeregelten Rädern, deren Bremsschlupf unterhalb der Toleranz liegt. Dadurch kann vorsorglich ein drohendes Blockieren eines nicht-bremsschlupfgeregelten Rades verhindert werden; die Sicherheit steigt.

Somit ist es möglich, zum Erreichen des Summenbremsdruckes oder Summenbremsmomentes oder der Summenbremskraft Faktoren zu wählen, die größer oder kleiner als Eins sind, d.h. der ausgesteuerte bzw. eingestellte Bremsdruck oder das Bremsmoment oder die Bremskraft an den nicht-bremsschlupfgeregelten Radbremsen erhöht oder verringert wird. Entscheidend ist lediglich, dass der Summenbremsdruck oder das Summenbremsmoment oder die Summenbremskraft zur Bewirkung der vorgegebenen Fahrzeug-Soll-Verzögerung mit und ohne ABS-Regelung in etwa gleich bleibt, um die Fahrzeug-Soll-Verzögerung zuverlässig erreichen zu können.

Weiterhin können auch radindividuelle Faktoren in Abhängigkeit von einem Gewicht bzw. einer Beladung des Fahrzeuges festgelegt werden, wobei beispielsweise bei einer geringen Beladung d.h. einer geringeren Gewichtskraft auf der Hinterachse bzw. den Hinterrädern und einem hohem Gewicht, d.h. einer höheren Gewichtskraft auf der Vorderachse bzw. den Vorderrädern die Faktoren auf der Hinterachse bzw. den nicht-bremsschlupfgeregelten Hinterrädern im Vergleich zu den Faktoren auf der Vorderachse bzw. den nicht-bremsschlupfgeregelten Vorderrädern niedriger gewählt werden. Denn die Räder der Hinterachse neigen bei niedriger Beladung eher zu einem Blockieren als die Räder der Vorderachse.

Vorteilhafterweise hat die ABS-Regelung in jeder Fahrsituation Vorrang vor dem erfindungsgemäßen Verfahren, d.h. wird in Folge einer Anwendung des erfindungsgemäßen Verfahrens der Bremsdruck an den nicht-bremsschlupfgeregelten Rädern erhöht und steigt infolgedessen der Bremsschlupf an einem dieser Räder über den Soll-Bremsschlupf hinaus an, veranlasst die ABS-Regelung ein Halten bzw. Senken des Bremsdruckes an diesem Rad.

Vorzugsweise kann das Fahrzeug ein einteiliges Nutzfahrzeug sein, d.h. beispielsweise ein Bus oder ein LKW mit zwei oder mehreren abbremsbaren Achsen. Das Verfahren kann aber auch in mehrteiligen Fahrzeugen, beispielsweise in einem LKW mit Anhänger oder einem Sattelzug, d.h. einer Zugmaschine mit einem Auflieger, durchgeführt werden. Dabei können sowohl die Räder des LKWs bzw. der Zugmaschine als auch die Räder des Anhängers bzw. des Aufliegers abbremsbar sein. Demnach können durch das erfindungsgemäße Verfahren bei einem Bremsschlupfregelfall durch das ABS beispielsweise an einem der Räder des LKWs bzw. der Zugmaschine auch die Bremsdrücke an den Radbremsen der nicht-bremsschlupfgeregelten Räder des Anhängers bzw. des Aufliegers angepasst werden, um die fehlende Bremswirkung auszugleichen. Entsprechendes gilt bei einem Bremsschlupfregelfall durch das ABS an einem der Räder des Anhängers bzw. des Aufliegers. Dabei kann bei der Anpassung der Bremsdrücke durch den Faktor berücksichtigt werden, dass der Anhänger bzw. der Auflieger eher zu einem instabilen Fahrverhalten neigt, d.h. die Bremsdrücke werden an dem Anhänger bzw. Auflieger in einem geringeren Maße erhöht als an den Radbremsen des LKWs bzw. der Zugmaschine.

Die Erfindung wird im Folgenden anhand der beiliegenden Zeichnung erläutert. Es zeigen:
- Fig. 1: ein Fahrzeug mit einem elektronischen Bremssystem als Blockschaltbild;
- Fig. 2a: das Fahrzeug gemäß Figur 1 in einer Kurvenfahrt;
- Fig. 2b: das Fahrzeug gemäß Fig. 1 in einer Seitenansicht;
- Fig. 3: ein LKW mit einem Anhänger in einer Kurvenfahrt; und
- Fig. 4: ein Flussdiagramm zur Durchführung des erfindungsgemäßen Verfahrens.

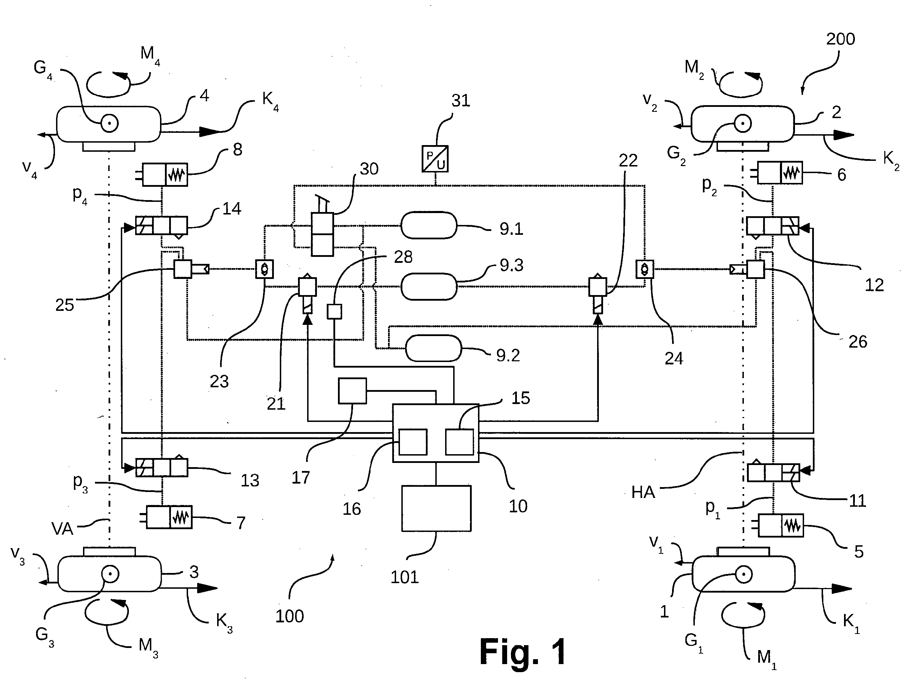

Die Figur 1 zeigt ein Fahrzeug 200 mit einem elektronischen Bremssystem 100 mit den hier relevanten Komponenten. Demnach ist eine Hinterachse HA mit Hinterrädern 1, 2 sowie eine Vorderachse VA mit Vorderrädern 3, 4 vorgesehen. Die Hinterräder 1, 2 können über hintere Radbremsen 5, 6 die Vorderräder 3, 4 über vordere Radbremsen 7, 8 abgebremst werden. Das Bremssystem 100 kann ein elektro-hydraulisches oder elektropneumatisches Bremssystem sein, d. h. es wird ein Flüssigkeitsdruck oder ein Luftdruck ausgesteuert.

Zur bremsschlupfgeregelten Abbremsung weist das Bremssystem 100 ein Antiblockiersystem (ABS) mit einer ABS-Steuereinrichtung 10 auf, die ABS-Bremsventile 11, 12, 13, 14 in Abhängigkeit eines erfassten Bremsschlupfes BS₁, BS₂, BS₃, BS₄ an dem jeweiligen Rad 1, 2, 3, 4 gepulst ansteuert.

Die ABS-Bremsventile 11, 12, 13, 14 an den hinteren und vorderen Radbremsen 5, 6, 7, 8 weisen jeweils ein als 2/2-Magnetventil ausgeführtes Einlassventil und ein Auslassventil auf. Ist das Einlassventil geöffnet und das Auslassventil gesperrt, können die entsprechenden Radbremsen 5, 6, 7, 8 mit einem von Druckvorratsbehältern 9.1, 9.2 für den entsprechenden Bremskreis bereitgestellten und von einem Bremsventil 30 und Relaisventilen 25, 26 ausgesteuerten Bremsdruck p₁, p₂, p₃, p₄ beaufschlagt und somit eine entsprechende Bremsung durch die Räder 1, 2, 3, 4 bewirkt werden. Ist das Einlassventil gesperrt und das Auslassventil geöffnet, werden die hinteren und vorderen Radbremsen 5, 6, 7, 8 entlüftet und die Bremswirkungen durch die Räder 1, 2, 3, 4 reduziert. Ist sowohl das Einlassventil als auch das Auslassventil gesperrt, wird ein an den hinteren und den vorderen Radbremsen 5, 6, 7, 8 wirkender Bremsdruck p₁, p₂, p₃, p₄ gehalten.

Die Bremsdrücke p₁, p₂, p₃, p₄ an den jeweiligen Radbremsen 5, 6, 7, 8 der Räder 1, 2, 3, 4 können von der ABS-Steuereinrichtung 10 radindividuell eingestellt werden, so dass entsprechend auf einen Fall einer Überschreitung eines Soll-Bremsschlupfes BS_{Soll} an einem der Räder 1, 2, 3, 4 reagiert werden kann. Das heißt, wird von der ABS-Steuereinrichtung 10 erkannt, dass beispielsweise der Bremsschlupf BS₃ an dem linken Vorderrad 3 von einem Soll-Bremsschlupf BS_{Soll} überschreitend abweicht, d.h. das linke Vorderrad 3 dazu neigt, zu schlüpfen bzw. zu blockieren, veranlasst die ABS-Steuereinrichtung 10 ein Druckhalten oder ein Drucksenken des Bremsdruckes p₃ an der Radbremse 7 durch entsprechendes Ansteuern des ABS-Bremsventils 13.

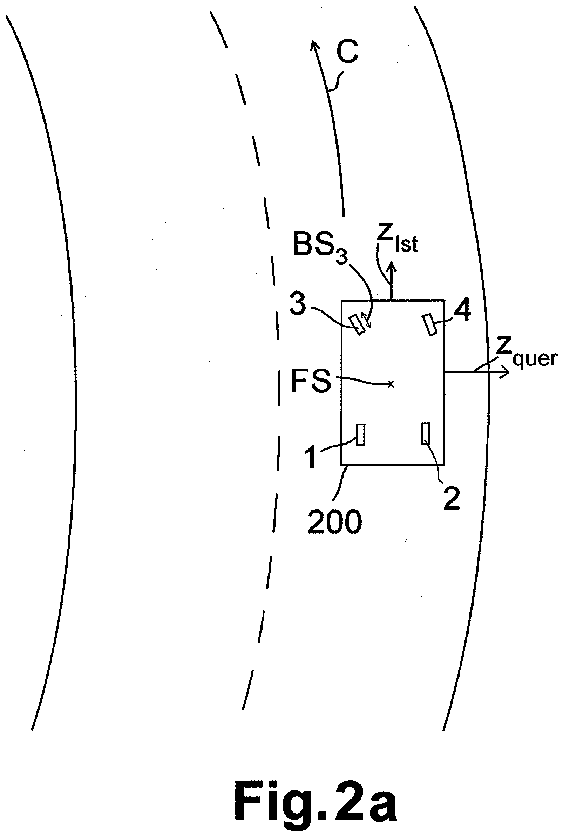

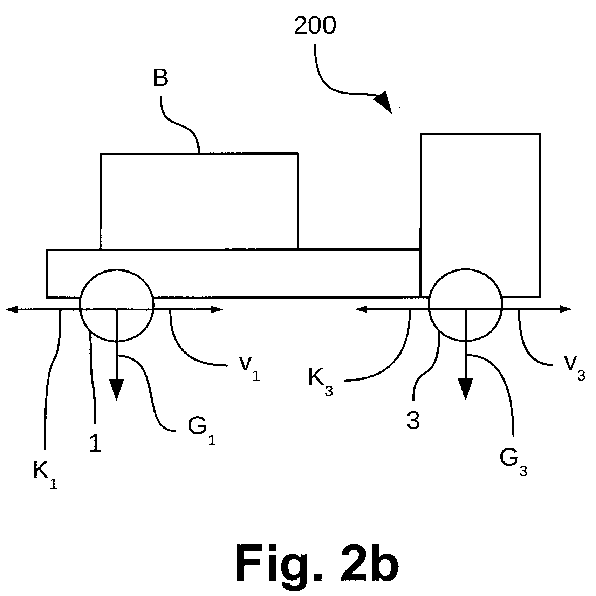

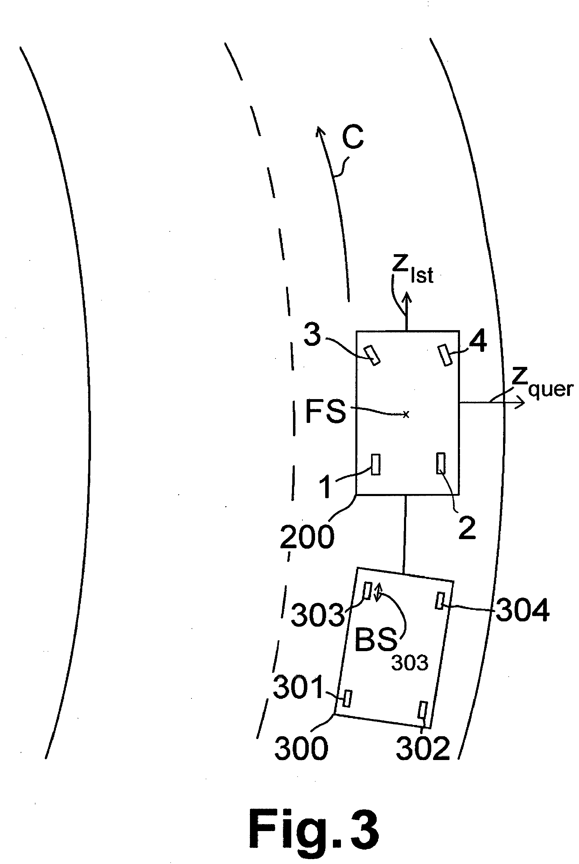

Als weiteres Fahrerassistenzsystem beziehungsweise Stabilitätskontrollsystem ist gemäß dieser Ausführungsform in der ABS-Steuereinrichtung 10 eine von einer RSC-Steuereinrichtung 16 gesteuerte Umkipp-Verhinderung (Roll Stability Control, RSC) vorgesehen, die während einer Kurvenfahrt entlang eines Pfades C (s. Fig. 2a und Fig. 3) insbesondere aus einer aktuell vorliegenden lateralen Beschleunigung z_{quer}, d. h einer Querbeschleunigung des Fahrzeuges 200, die beispielsweise von einem Querbeschleunigungssensor 17 gemessen werden kann, sowie von Raddrehgeschwindigkeiten v₁, v₂, v₃, v₄ der Räder 1, 2, 3, 4 und einem Fahrzeugschwerpunkt FS ermittelt, ob das Fahrzeug 200 zu einem Umkippen neigt oder nicht. Bei einer Neigung zum Umkippen gibt die RSC-Steuereinrichtung 16 eine Fahrzeug-Soll-Verzögerung z_{Soll} aus, die bei einer eventuellen Betätigung des Bremspedals durch den Fahrer zusätzlich eine über einen als Drucksensor ausgeführten Bremswertgeber 31 erfasste Fahrzeug-Soll-Verzögerung z_{Soll} berücksichtigt. Die Fahrzeug-Soll-Verzögerung z_{Soll} wird also derartig anpasst bzw. angefordert, dass das Fahrzeug 200 stärker verzögert wird, um einem Umkippen entgegenzuwirken.

Die Umkipp-Verhinderung ist hierbei lediglich optional und für das erfindungsgemäße Verfahren nicht zwingend erforderlich. So kann die Fahrzeug-Soll-Verzögerung z_{Soll} ergänzend oder alternativ auch von einem beliebigen anderen Fahrerassistenzsystem bzw. Stabilitätskontrollsystem, beispielsweise einem Stabilitätsprogramm (ESP), einer Abstandsregelung (ACC) oder eines Notbremssystems (AEBS), die Teil des elektronischen Bremssystems 100 sind, vorgegeben und an die ABS-Steuereinrichtung 10 übermittelt werden.

Damit sich die durch das jeweilige Fahrerassistenzsystem angeforderte Fahrzeug-Soll-Verzögerung z_{Soll} , die ggf. zusätzlich zu einer von dem Fahrer angeforderten Fahrzeug-Soll-Verzögerung gefordert wird, einstellt, steuert die ABS-Steuereinrichtung 10 die Radbremsen 5, 6, 7, 8 mit den entsprechenden Bremsdrücken p₁, p₂, p₃, p₄ an. Gemäß dieser Ausführungsform kann dies insbesondere erreicht werden, indem die ABS-Steuereinrichtung 10 zunächst ein 3/2-Wegeventil 21 für die Radbremsen 7, 8 der Vorderachse VA bzw. ein 3/2-Wegeventil 22 für die Radbremsen 5, 6 der Hinterachse HA ansteuert, die an einen weiteren Druckvorratsbehälter 9.3 angeschlossen sind. Die 3/2-Wegeventile 21, 22 sind jeweils über ein Rückschlagventil 23, 24 mit einem Relaisventil 25, 26 für die jeweilige Fahrzeugachse VA, HA verbunden. Bei entsprechender Ansteuerung der 3/2-Wegeventile 21, 22 kann dadurch ein ggf. durch das Bremsventil 30 bereitgestellter Druck erhöht werden, indem die Verbindung zwischen den Druckvorratsbehältern 9.1, 9.2 und den ABS-Bremsventilen 11, 12, 13, 14 über die Relaisventile 25, 26 freigegeben wird. Somit kann über die ABS-Bremsventile 11, 12, 13, 14 an die vorderen oder hinteren Radbremsen 5, 6, 7, 8 ein Bremsdruck p₁, p₂, p₃, p₄ auch erhöht werden, um die angeforderte Fahrzeug-Soll-Verzögerung z_{Soll} zu erfüllen.

Weiterhin ist erfindungsgemäß eine Verzögerungs-Einrichtung 15 vorgesehen, die gemäß dieser Ausführungsform Teil der ABS-Steuereinrichtung 10 ist und in der das erfindungsgemäße Verfahren zum elektronischen Regeln einer Fahrzeugverzögerung eines bremsschlupfgeregelten Fahrzeuges 200 durchgeführt wird.

Die Verzögerungs-Einrichtung 15 ist dazu ausgebildet, die aktuell ausgesteuerten Bremsdrücke p₁, p₂, p₃, p₄ an den Radbremsen 5, 6, 7, 8 bzw. dadurch verursachte Bremskräfte K₁, K₂, K₃, K₄ oder Bremsmomente M₁, M₂, M₃, M₄ der Räder 1, 2, 3, 4 zu bestimmen, vorzugsweise zu schätzen, indem beispielsweise die Ansteuerzeiten der Auslassventile und der Einlassventile der einzelnen ABS-Bremsventile 11, 12, 13, 14 unter Berücksichtigung von beispielsweise in einer EBS-Steuereinrichtung 101 des elektronischen Bremssystems 100 gespeicherten Parametern, wie beispielsweise eine Bremszylindergröße, ausgewertet werden. In Abhängigkeit eines Bremsschlupfregelfalls durch das ABS beispielsweise an dem linken Vorderrad 3 werden dann durch die Verzögerungs-Einrichtung 15 die bestimmten bzw. geschätzten Bremsdrücke p₁, p₂, p₄ oder Bremsmomente M₁, M₂, M₄ oder Bremskräfte K₁, K₂, K₄ entsprechend angepasst, indem die ausgesteuerten Bremsdrücke p₁, p₂, p₄ beispielsweise erhöht oder auch verringert werden, wobei die Aussteuerung der Bremsdrücke p₁, p₂, p₄ durch Ansteuern der 3/2-Wegeventile 21, 22, der Relaisventile 25, 26 sowie der ABS-Bremsventile 11, 12, 14 an den Radbremsen 5, 6, 8 aller nicht-bremsschlupfgeregelten und abbremsbaren Räder 1, 2, 4 durch die ABS-Steuereinrichtung 10 stattfindet. Die Information, dass ein Bremsschlupfregelfall durch das ABS an einem der Räder 1, 2, 3, 4 vorliegt, kann beispielsweise von der ABS-Steuereinrichtung 10 bereitgestellt werden, die bei Überschreiten des Soll-Bremsschlupfes BS_{Soll} beispielsweise an dem linken Vorderrad 3 ein entsprechendes Signal an die Verzögerungs-Einrichtung 15 ausgibt.

Wird das erfindungsgemäße Verfahren während einer Kurvenfahrt C durchgeführt und wird von einer Fahrsituation gemäß Fig. 2a ausgegangen, d.h. das Fahrzeug 200 befindet sich in einer Links-Kurve, wird vorzugsweise zusätzlich überwacht, ob eines der früher zum Blockieren neigenden, kurveninneren Räder 1, 3 durch das ABS bremsschlupfgeregelt wird. Wird also das kurveninnere, linke Vorderrad 3 durch das ABS bremsschlupfgeregelt, veranlasst die Verzögerungs-Einrichtung 15 über die ABS-Steuereinrichtung 10 ein Erhöhen der Bremsdrücke p₁, p₂, p₄ an den Radbremsen 5, 6, 8 der nicht-bremsschlupfgeregelten Räder 1, 2, 4 des Fahrzeuges 200. Sind gemäß Fig. 3 weitere abbremsbare Räder 301, 302, 303, 304 beispielsweise an einer weiteren Achse oder einem Anhänger 300 oder einem Auflieger vorhanden, die zu diesem Zeitpunkt nicht bremsschlupfgeregelt sind, können die Bremsdrücke an diesen weiteren Rädern 301, 302, 303, 304 ebenfalls erhöht werden.

Eine Erhöhung bzw. Anpassung der Bremsdrücke p₁, p₂, p₄ sowie ggf. der Bremsdrücke an den Radbremsen des Anhängers 300 findet dabei unter Berücksichtigung eines Faktors F statt. Dabei ist vorgesehen, dass ein Summenbremsdruck p_{Sum}, der sich aus der Summe aller Bremsdrücke p₁, p₂, p₃, p₄ des Fahrzeuges 200 und des Anhängers 300 ergibt, mit und ohne aktiver ABS-Regelung in etwa gleich bleibt, wobei der Summenbremsdruck ohne aktiver ABS-Regelung aus p_{Sum}=p₁ + p₂ + p₃ + p₄ folgt, wobei die Bremsdrücke p₁, p₂, p₃, p₄ ohne aktiver ABS-Bremsdruckregelung anhand der angeforderten Fahrzeug-Soll-Verzögerung z_{Soll} abgeschätzt werden unter Berücksichtigung der beispielsweise in der EBS-Steuereinrichtung 101 hinterlegten Parameter insbesondere bezüglich der Bremszylindergröße.

Bei aktiver ABS-Bremsdruckregelung - in diesem Beispiel am linken Vorderrad 3 - berechnet sich der Summenbremsdruck unter Berücksichtigung des Faktors F aus p^{ABS}_{Sum} = F x (p₁ + p₂ + p₄) + p₃, wobei auch eine radindividuelle Anpassung möglich ist, d.h. jeder Bremsdruck p₁, p₂, p₄ wird mit einem individuellen Faktor F₁, F₂, F₄ erhöht, d.h. p^{ABS}_{Sum} = F₁ x p₁ + F₂ x p₂ + F₄ x p₄ + p₃, wobei p^{ABS}_{Sum} = pₛᵤₘ gefordert ist und p₃ von der erfindungsgemäßen Regelung in diesem Beispiel nicht beeinflusst wird, sondern lediglich durch die ABS-Bremsdruckregelung.

Alternativ kann auch ein Summenbremsmoment M^{ABS}_{Sum} = F₁ x M₁ + F₂ x M₂ + F₄ x M₄ + M₃ oder eine Summenbremskraft K^{ABS}_{Sum} = F₁ x K₁ + F₂ x K₂ + F₄ x K₄ + K₃ betrachtet werden, um die fehlende Bremswirkung auszugleichen. Das Summenbremsmoment M_{Sum} bzw. die Summenbremskraft K_{Sum} ohne aktive ABS-Bremsschlupfregelung berechnet sich entsprechend aus M_{Sum} = M₁ + M₂ + M₃ + M₄ bzw. K^{ABS}_{Sum} = K₁ + K₂ + K₃ + K₄ in Abhängigkeit der angeforderten Fahrzeug-Soll-Verzögerung z_{Soll}.

Der Faktor F; F₁, F₂, F₄ hängt insbesondere davon ab, wie hoch die Anzahl der bremsschlupfgeregelten Räder 3 ist und wie die Bremskraftverteilung im Fahrzeug 200 beispielsweise durch die EBS-Steuereinrichtung 101 eingestellt ist. Trägt jede Radbremse 5, 6, 7, 8 ohne aktive ABS-Bremsdruckregelung in etwa zu gleichen Teilen zum Bewirken der Fahrzeug-Soll-Verzögerung z_{Soll} bei und wird lediglich das linke, kurveninnere Vorderrad 3 durch das ABS bremsschlupfgeregelt, wird die fehlende Bremswirkung bzw. die daraus folgende Reduzierung des Summenbremsdruckes p_{Sum} zu jeweils etwa einem Drittel auf die Bremsdrücke p₁, p₂, p₄ an den anderen Radbremsen 4, 6, 8 verteilt. Dabei wird zusätzlich berücksichtigt, dass das durch das ABS bremsschlupfgeregelte, linke Vorderrad 3 weiterhin zur Verzögerung des Fahrzeuges 200 beiträgt, allerdings in einem geringeren Maße.

Somit kann bei einem ABS-Bremsschlupfregelfall an dem linken, kurveninneren Vorderrad 3, bei dem die ABS-Steuereinrichtung 10 ein Druckhalten oder ein Drucksenken des Bremsdruckes p₃ durchsetzt, die Fahrzeug-Soll-Verzögerung z_{Soll} dennoch erreicht werden. Denn durch das Druckhalten oder Drucksenken an der Radbremse 7 des durch das ABS bremsschlupfgeregelten, linken Vorderrades 3 trägt dieses nur noch in geringerem Maße dazu bei, die beispielsweise von der RSC-Steuereinrichtung 16 angeforderte Fahrzeug-Soll-Verzögerung z_{Soll} zu bewirken. Um die Fahrzeug-Soll-Verzögerung z_{Soll} dennoch sicher und zuverlässig zu erreichen, werden die Bremsdrücke p₁, p₂, p₄ an den Radbremsen 5, 6, 8 der anderen Räder 1, 2, 4 entsprechend erhöht, um den geringeren Bremsdruck p₃ an der Radbremse 7 des durch das ABS bremsschlupfgeregelten, linken Vorderrades 3 auszugleichen.

Entsprechendes gilt, wenn gemäß dieser Ausführungsform das kurveninnere, linke Hinterrad 1 beginnt zu schlüpfen und von der ABS-Steuereinheit 10 bremsschlupfgeregelt wird. Werden sowohl das kurveninnere, linke Hinterrad 1 als auch das kurveninnere, linke Vorderrad 3 durch das ABS bremsschlupfgeregelt, werden die Bremsdrücke p₂, p₄ der Radbremsen 6 und 8 der rechten Fahrzeugseite auf der Kurvenaußenseite entsprechend um etwa das Doppelte erhöht, wobei auch hier berücksichtigt werden kann, welche Bremswirkung durch die bremsschlupfgeregelten Räder 1 und 3 noch gewährleistet wird.

In der Fig. 3 ist eine Fahrsituation mit einem LKW 200 und einem Anhänger 300 mit abbremsbaren Rädern 301, 302, 303, 304 dargestellt. Wird festgestellt, dass der Bremsschlupf BS₃₀₃ des Anhängerrades 303 über dem Soll-Bremsschlupf BS_{Soll} liegt, veranlasst beispielsweise die ABS-Steuereinrichtung 10 ein Druckhalten oder Drucksenken an den Radbremsen des Anhängerrades 303. An allen anderen Radbremsen der durch das ABS nicht bremsschlupfgeregelten Räder 301, 302, 304 des Anhängers 300 sowie den Radbremsen 5, 6, 7, 8 der durch das ABS nicht bremsschlupfgeregelten Räder 1, 2, 3, 4 des LKWs 200 wird der Bremsdruck entsprechend angepasst. Ebenso können für den Fall, dass das linke Vorderrad 3 des LKWs 200 bremsschlupfgeregelt wird, alle Radbremsen des Anhängers 300 bei der erfindungsgemäßen Anpassung der Bremsdrücke berücksichtigt werden, insofern diese nicht bereits blockieren.

Der Faktor F bzw. die radindividuellen Faktoren F₁, F₂, F₃, F₄ können hierbei bei einer Bremsung auch dynamisch angepasst werden, z.B. als Reaktion auf die Stabilität des Fahrzeuges 200 während der Bremsung im ABS-Bremsschlupfregelfall. So können beispielsweise auch bei einem Übergang aus einer Geradeausfahrt in eine Kurvenfahrt C, der durch das Überwachen eines Lenkradwinkelsensors 28 erkannt werden kann, die Faktoren F₂, F₄ der kurvenäußeren, durch das ABS nicht bremsschlupfgeregelten Räder 2, 4 entsprechend erhöht und die Faktoren F₁, F₃ der kurveninneren, durch das ABS nicht bremsschlupfgeregelten Räder 1 im Rahmen der Anpassung entsprechend verringert werden, um die eher zu einem Schlüpfen neigenden kurveninneren Räder 1 in Relation zu den Rädern 2, 4 der Kurvenaußenseite zu entlasten, wobei der Summenbremsdruck p^{ABS}_{Sum} oder das Summenbremsmoment M^{ABS}_{Sum} oder die Summenbremskraft K^{ABS}_{Sum} gleich bleiben. Weiterhin kann auch in Abhängigkeit einer Achslast aufgrund einer Beladung B des Fahrzeuges 200 für die Räder 1, 2, 3, 4 bestimmter Fahrzeugachsen VA, HA ein unterschiedlicher Faktor F; F₁, F₂, F₃, F₄ festgelegt werden, um die unterschiedlichen, auf die Fahrzeugachsen VA, HA bzw. auf die Räder 1, 2, 3, 4 wirkenden Gewichtskräfte G₁, G₂, G₃, G₄ zu berücksichtigen.

Zusätzlich kann vorgesehen sein, die Bremsdrücke p₁, p₂, p₄ an den Radbremsen 5, 6, 8 der durch das ABS nicht-bremsschlupfgeregelten Räder 1, 2, 4 in Abhängigkeit des erfassten Bremsschlupfes BS₁, BS₂, BS₄ und/oder der Querbeschleunigung z_{quer} zu regeln. Dabei wird überwacht, ob der Bremsschlupf BS₁, BS₂, BS₄ an einem der durch das ABS nicht-bremsschlupfgeregelten Räder 1, 2, 4, beispielsweise des linken Hinterrades 1 oberhalb einer Toleranz BS_{T} für den Bremsschlupf liegt, wobei die Toleranz BS_{T} unterhalb des Soll-Bremsschlupfes BS_{Soll} liegt, d.h. es liegt noch kein unzulässiger Bremsschlupf BS₁ an diesem Rad 1 vor; es wird also eine vorsorgliche Toleranz BS_{T} festgelegt. Wird diese erreicht, werden nur noch die Bremsdrücke p₂, p₄ an den Radbremsen 6, 8 angepasst bzw. erhöht, an denen der Bremsschlupf BS₂, BS₄ unterhalb der Toleranz BS_{T} liegt, und der Bremsdruck p₁ beispielsweise gehalten oder weniger stark erhöht, indem die Faktoren F₁, F₂, F₄ entsprechend angepasst werden. Dadurch kann verhindert werden, dass ein weiterer ABS Bremsschlupfregelfall an dem nicht-bremsschlupfgeregelten Rad 1 auftritt. Die Querbeschleunigung z_{quer} kann ergänzend herangezogen werden, um die aktuelle Fahrsituation zu bewerten.

Weiterhin können auch für einen Anhänger 300 oder einen Auflieger geringere Faktoren F festgelegt werden, da Anhänger 300 oder Auflieger andere Stabilitätseigenschaften aufweisen, beispielsweise aufgrund deren Bauform, wie Drehschemelanhänger oder Starrdeichselanhänger oder seines Gewichtes, das durch die EBS-Steuereinrichtung ermittelt werden kann.

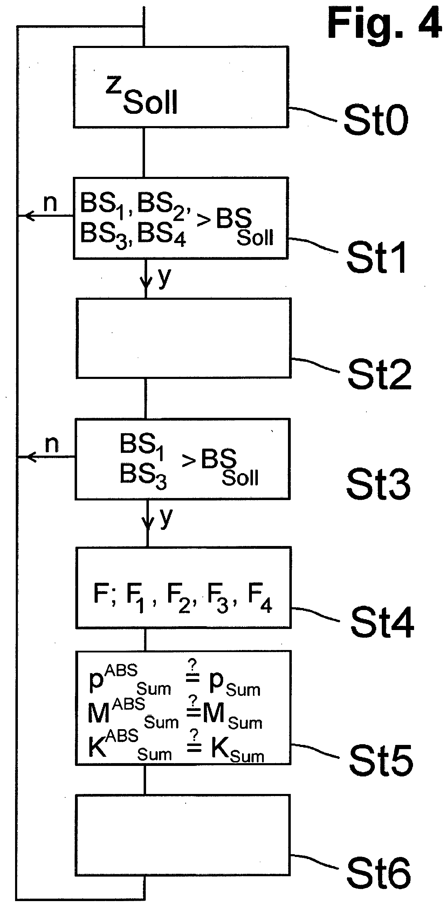

Das erfindungsgemäße Verfahren kann gemäß Figur 4 wie folgt durchgeführt werden:
In einem Schritt St0 wird das Verfahren gestartet, z.B. durch eine empfangene Bremsanforderung eines Fahrerassistenzsystems, wie beispielsweise eines Stabilitätskontrollsystems (Roll Stability Control, RSC). In einem ersten Schritt St1 wird erfasst, ob eines der Räder 1, 2, 3, 4 des Fahrzeuges 200 einen Bremsschlupf BS₁, BS₂, BS₃, BS₄ aufweist, der höher ist als ein Soll-Bremsschlupf BS_{Soll}, d. h. ob an einem Rad 1, 2, 3, 4 ein ABS-Bremsschlupfregelfall vorliegt, der von der ABS-Steuereinrichtung 10 aktiv geregelt wird. Liegt kein Schlupffall vor, beginnt das Verfahren von vorn.

Anschließend wird in einem optionalen zweiten Schritt St2 erfasst, ob sich das Fahrzeug 200 in einer Kurvenfahrt befindet, beispielsweise durch Auslesen eines Lenkwinkelsensors 28 oder eines Querbeschleunigungssensors 17.

Liegt eine Kurvenfahrt vor, wird in einem optionalen Zwischenschritt St3 erfasst, ob das im Schritt St1 bestimmte bremsschlupfgeregelte Rad 1, 2, 3, 4 ein kurveninneres Rad 1, 3 ist. Dies kann beispielsweise durch einen Vergleich der Bremsschlüpfe BS₁ und BS₂ bzw. BS₃ und BS₄ der Räder 1, 2, 3, 4 einer Fahrzeugachse VA, HA erfolgen, da ein kurveninneres Rad 1, 3 einer Fahrzeugachse HA, VA eher dazu neigt, zu schlüpfen als das kurvenäußere Rad 2, 4 derselben Fahrzeugachse HA, VA. Weiterhin können aber auch Informationen beispielsweise von dem Querbeschleunigungssensor 17 oder der Lenkeinschlag berücksichtigt werden.

Wurde im Schritt St1 bzw. im Schritt St3 ein entsprechender Schlupffall erkannt, werden in einem vierten Schritt St4 die Bremsdrücke p₁, p₂, p₃, p₄ an den Radbremsen 5, 6, 7, 8 aller anderen, nicht-bremsschlupfgeregelten Räder 1, 2, 3, 4 bestimmt, beispielsweise von der Verzögerungs-Einrichtung 15 geschätzt, und in einem fünften Schritt St5 von der ABS-Steuereinrichtung 10 durch Ansteuern der entsprechenden Ventile 11, 12, 13, 14, 21, 22 erhöht, wobei die aktuell ausgesteuerten Bremsdrücke p₁, p₂, p₃, p₄ an den nicht-bremsschlupfgeregelten Radbremsen 5, 6, 7, 8 mit dem Faktor F oder einem radindividuellen Faktor F₁, F₂, F₃, F₄ entsprechend der Fahrsituation angeglichen werden, so dass die an die Radbremsen 5, 6, 7, 8 ausgesteuerten Bremsdrücke p₁, p₂, p₃, p₄ bzw. der Summenbremsdruck p^{ABS}_{Sum} bzw. das Summenbremsmoment M^{ABS}_{Sum} oder die Summenbremskraft K^{ABS}_{Sum} die verringerte Bremswirkung des schlüpfenden Rades ausgleichen. Somit kann die vom RSC angeforderte Fahrzeug-Soll-Verzögerung z_{Soll} dennoch erreicht werden. Ohne die optionalen Schritte St2 und St3, d.h. ohne das Berücksichtigen einer Kurvenfahrt, werden die Schritte St2 und St3 übersprungen und sofort zu Schritt St4 übergegangen.

In einem optionalen sechsten Schritt St6 kann eine dynamische Anpassung der Faktoren F; F₁, F₂, F₃, F₄ stattfinden, wobei berücksichtigt werden kann, wie das Fahrzeug 200 auf die erfindungsgemäße Erhöhung der Bremsdrücke p₁, p₂, p₃, p₄ reagiert.

Nach Beendigung des Verfahrens beginnt das Verfahren wieder im Schritt St0.

### Bezugszeichenliste

- 1, 2: Hinterräder
- 3, 4: Vorderräder
- 5, 6: hintere Radbremsen
- 7, 8: vordere Radbremsen
- 9.1, 9.2, 9.3: Druckvorratsbehälter
- 10: ABS-Steuereinrichtung
- 11, 12: ABS-Bremsventile hintere Radbremsen 5, 6
- 13, 14: ABS-Bremsventile vordere Radbremsen 7, 8
- 15: Verzögerungs-Einrichtung
- 16: RSC-Steuereinrichtung
- 17: Querbeschleunigungssensor
- 21, 22: 3/2-Wegeventil
- 23, 24: Rückschlagventil
- 25, 26: Relaisventil
- 28: Lenkradwinkelsensor
- 30: Bremsventil
- 31: Bremswertgeber
- 100: Bremssystem
- 101: EBS-Steuereinrichtung
- 200: Fahrzeug/LKW
- 300: Anhänger
- 301, 302, 303, 304: Rad von Anhänger 300

- ABS: Antiblockiersystem
- B: Beladung
- BS₁, BS₂, BS₃, BS₄: Bremsschlupf
- BS_{Soll}: Soll-Bremsschlupf
- C: Pfad/Kurvenfahrt
- F: Faktor
- F₁, F₂, F₃, F₄: radindividueller Faktor
- FS: Fahrzeugschwerpunkt
- G₁, G₂, G₃, G₄: Gewichtskraft
- HA: Hinterachse
- K₁, K₂, K₃, K₄: Bremskraft
- K_{Sum}: Summenbremskraft ohne aktiver ABS-Regelung
- K^{ABS}_{Sum}: Summenbremskraft mit aktiver ABS-Regelung
- M₁, M₂, M₃, M₄: Bremsmoment
- M_{Sum}: Summenbremsmoment ohne aktiver ABS-Regelung
- M^{ABS}_{Sum}: Summenbremsmoment mit aktiver ABS-Regelung
- p₁, p₂, p₃, p₄: Bremsdruck Radbremsen 5, 6, 7, 8
- psum: Summenbremsdruck ohne aktiver ABS-Regelung
- p^{ABS}_{Sum}: Summenbremsdruck mit aktiver ABS-Regelung
- RSC: Roll Stability Control/Umkipp-Verhinderung
- v₁, v₂, v₃, v₄: Raddrehgeschwindigkeit
- VA: Vorderachse
- z_{quer}: Querbeschleunigung
- z_{Soll}: Fahrzeug-Soll-Verzögerung
- z_{Ist}: Fahrzeug-Ist-Verzögerung

- St0, St1, St2, St3, St4, St5, St6: Schritte des Verfahrens

## Patentansprüche

1. Verfahren zum elektronischen Regeln einer Fahrzeugverzögerung eines bremsschlupfgeregelten Fahrzeuges (200), insbesondere eines Nutzfahrzeuges, insbesondere mit einem pneumatischen Bremssystem (100), mit mindestens den folgenden Schritten:
Erfassen, ob mindestens eines der Räder (1, 2, 3, 4) des Fahrzeuges (200) einen Bremsschlupf (BS₁, BS₂, BS₃, BS₄) aufweist, der einen Soll-Bremsschlupf (BS_{Soll}) überschreitet, wobei das mindestens eine Rad (3) bei einem Überschreiten bremsschlupfgeregelt wird zum Vermeiden eines Blockierens des mindestens einen Rades (3) (St1);
Bestimmen einer von Radbremsen (5, 6, 7, 8) an den Rädern (1, 2, 3, 4) des Fahrzeuges (200) verursachten Bremswirkung (St4);
Anpassen von an den Radbremsen (5, 6, 8) der nicht-bremsschlupfgeregelten Räder (1, 2, 4) ausgesteuerten Bremsdrücken (p₁, p₂, p₄) zum Anpassen der verursachten Bremswirkung (St5), wobei
die Bremsdrücke (p₁, p₂, p₄) an den Radbremsen (5, 6, 8) aller nicht-bremsschlupfgeregelten Räder (1, 2, 4) angepasst werden, wobei die Bremsdrücke (p₁, p₂, p₄) derartig gewählt werden, dass eine durch die Bremsschlupfregelung an dem mindestens einen Rad (3) reduzierte Bremswirkung durch die Anpassung der Bremsdrücke (p₁, p₂, p₄) an den Radbremsen (5, 6, 8) aller nicht-bremsschlupfgeregelten Räder (1, 2, 4) ausgeglichen wird, **dadurch gekennzeichnet, dass**
an jeder Radbremse (5, 6, 8) der nicht-bremsschlupfgeregelten Räder (1, 2, 4) ein radindividueller Faktor (F₁, F₂, F₄) angesetzt wird,
wobei der Faktor (F; F₁, F₂, F₄) in Abhängigkeit davon gewählt wird, ob eine Kurvenfahrt (C) vorliegt, wobei die radindividuellen Faktoren (F₁, F₂, F₄) an kurvenäußeren, nicht-bremsschlupfgeregelten Rädern (1) größer ist als an kurveninneren, nicht-bremsschlupfgeregelten Rädern (2, 4).

2. Verfahren nach Anspruch 1, **dadurch gekennzeichnet, dass** die Bremswirkung durch einen Bremsdruck (p₁, p₂, p₃, p₄) und/oder ein Bremsmoment (M₁, M₂, M₃, M₄) und/oder eine Bremskraft (K₁, K₂, K₃, K₄) charakterisiert wird.

3. Verfahren nach Anspruch 1 oder 2, **dadurch gekennzeichnet, dass** der Bremsdruck (p₃) an den Radbremsen (7) des bremsschlupfgeregelten Rades (3) durch die Bremsschlupfregelung (ABS) gehalten oder verringert wird.

4. Verfahren nach einem der Ansprüche 1 bis 3, **dadurch gekennzeichnet, dass** die Bremsdrücke (p₁, p₂, p₄) an den Radbremsen (5, 6, 8) der nicht-bremsschlupfgeregelten Räder (1, 2, 4) derartig gewählt werden, dass für eine erfasste Fahrzeug-Soll-Verzögerung (z_{Soll}) ein Summenbremsdruck (p^{ABS}_{Sum}) oder eine Summenbremskraft (K^{ABS}_{Sum}) oder ein Summenbremsmoment (M^{ABS}_{Sum}) bei aktiver Bremsschlupfregelung in etwa einem Summenbremsdruck (p_{Sum}) oder einer Summenbremskraft (K_{Sum}) oder einem Summenbremsmoment (M_{Sum}) ohne aktiver Bremsschlupfregelung entspricht.

5. Verfahren nach einem der vorhergehenden Ansprüche, **dadurch gekennzeichnet, dass** die Anpassung der Bremsdrücke (p₁, p₂, p₄) an den Radbremsen (5, 6, 8) aller nicht-bremsschlupfgeregelten Räder (1, 2, 4) dann erfolgt, wenn eine Kurvenfahrt (C) vorliegt.

6. Verfahren nach einem der vorhergehenden Ansprüche, **dadurch gekennzeichnet, dass** die Bremsdrücke (p₁, p₂, p₄) an den Radbremsen (5, 6, 8) der nicht-bremsschlupfgeregelten Räder (1, 2, 4) durch einen Faktor (F; F₁, F₂, F₄) angepasst werden.

7. Verfahren nach Anspruch 6, **dadurch gekennzeichnet, dass** die Faktoren (F; F₁, F₂, F₄) so gewählt werden, dass sich die Bremsdrücke (p₁, p₂, p₄) an den Radbremsen (5, 6, 8) der nicht-bremsschlupfgeregelten Räder (1, 2, 4) erhöhen.

8. Verfahren nach Anspruch 6 oder 7, **dadurch gekennzeichnet, dass** der Faktor (F; F₁, F₂, F₄) während einer Bremsung in Abhängigkeit der Reaktion des Fahrzeuges (200) auf die Anpassung der Bremsdrücke (p₁, p₂, p₄) dynamisch angepasst wird (St6).

9. Verfahren nach einem der vorhergehenden Ansprüche, **dadurch gekennzeichnet, dass** der Faktor (F; F₁, F₂, F₄) in Abhängigkeit einer Querbeschleunigung (z_{quer}) des Fahrzeuges (200) gewählt wird, wobei die radindividuellen Faktoren (F₁, F₂, F₄) für die nicht-bremsschlupfgeregelten Räder (1, 2, 4), auf die aufgrund der Querbeschleunigung (z_{quer}) eine höhere Gewichtskraft (G₁, G₂, G₃, G₄) wirkt, höher angesetzt wird als für die nicht-bremsschlupfgeregelten Räder (1, 2, 4), auf die aufgrund der Querbeschleunigung (z_{quer}) eine niedrigere Gewichtskraft (G₁, G₂, G₃, G₄) wirkt.

10. Verfahren nach einem der vorhergehenden Ansprüche, **dadurch gekennzeichnet, dass** der Faktor (F; F₁, F₂, F₄) in Abhängigkeit einer Beladung (B) des Fahrzeuges (200) gewählt wird, wobei die radindividuellen Faktoren (F₁, F₂, F₄) für die nicht-bremsschlupfgeregelten Räder (1, 2, 4), auf die aufgrund der Beladung (B) eine höhere Gewichtskraft (G₁, G₂, G₃, G₄) wirkt, höher angesetzt wird als für die nicht-bremsschlupfgeregelten Räder (1, 2, 4), auf die aufgrund der Beladung (B) eine niedrigere Gewichtskraft (G₁, G₂, G₃, G₄) wirkt.

11. Verfahren nach einem der vorhergehenden Ansprüche, **dadurch gekennzeichnet, dass** über einen Lenkradwinkelsensor (28) und/oder einen Querbeschleunigungssensor (17) und/oder aus einem Vergleich der Bremsschlüpfe (BS₁, BS₂, BS₃, BS₄) der kurveninneren und der kurvenäußeren Räder (1, 2, 4) einer Fahrzeugachse (HA, VA) ermittelt wird, ob eine Kurvenfahrt (C) vorliegt.

12. Verfahren nach einem der vorhergehenden Ansprüche, **dadurch gekennzeichnet, dass** während der Kurvenfahrt (C) eine von einer RSC-Steuereinrichtung (16) gesteuerte Umkipp-Verhinderung (RSC) aktiv ist zum Vorgeben einer Fahrzeug-Soll-Verzögerung (z_{Soll}) zum zusätzlichen Stabilisieren des Fahrzeuges (200) während der Kurvenfahrt (C).

13. Verfahren nach einem der vorhergehenden Ansprüche, **dadurch gekennzeichnet, dass** bei Feststellen einer Kurvenfahrt (C) lediglich dann die Bremsdrücke (p₁, p₂, p₄) an den Radbremsen (5, 6, 8) der nicht-bremsschlupfgeregelten Räder (1, 2, 4) angepasst werden, wenn festgestellt wird, dass das bremsschlupfgeregelte Rad (3) kein kurvenäußeres Rad (2, 4) ist.

14. Verfahren nach einem der vorhergehenden Ansprüche, **dadurch gekennzeichnet, dass** die Bremsdrücke (p₁, p₂, p₄) in Abhängigkeit des erfassten Bremsschlupfes (BS₁, BS₂, BS₄) und/oder der Querbeschleunigung (z_{quer}) zusätzlich bereits dann angepasst werden, wenn der Bremsschlupf (BS₁) an einem der nicht-bremsschlupfgeregelten Räder (1) oberhalb einer Toleranz (BS_{T}) liegen, wobei die Bremsdrücke (p₂, p₄) lediglich an den Radbremsen (6, 8) erhöht werden, an denen der Bremsschlupf (BS₂, BS₄) unterhalb der Toleranz (BS_{T}) liegt zum vorbeugenden Verhindern eines Schlupffalls an einem nicht-bremsschlupfgeregelten Rad (1).

15. Verfahren nach einem der vorhergehenden Ansprüche, **dadurch gekennzeichnet, dass** das Fahrzeug (200) ein einteiliges Fahrzeug, insbesondere Nutzfahrzeug, ist, beispielsweise ein LKW oder ein Bus, oder das Fahrzeug ein zweiteiliges Fahrzeug (200), insbesondere Nutzfahrzeug, ist, beispielsweise ein Zugfahrzeug mit einem Auflieger oder ein LKW (200) mit einem Anhänger (300), wobei die Bremsdrücke (p₁, p₂, p₃, p₄) und die Bremsschlüpfe (BS₁, BS₂, BS₃, BS₄, BS₃₀₃) sowohl an den Radbremsen (5, 6, 7, 8) bzw. den Rädern (1, 2, 3, 4) des Zugfahrzeuges oder des LKWs (200) als auch an den Radbremsen bzw. den Rädern (301, 302, 303, 304) des Aufliegers oder des Anhängers (300) angepasst bzw. überwacht werden.

16. Verzögerungs-Einrichtung (15) zum elektronischen Regeln einer Fahrzeugverzögerung eines bremsschlupfgeregelten Fahrzeuges (200), insbesondere Nutzfahrzeuges, mit einem pneumatischen Bremssystem (100), zur Durchführung eines Verfahrens nach einem der vorhergehenden Ansprüche, wobei die Verzögerungs-Einrichtung (15) ausgebildet ist,
zu erfassen, ob mindestens eines der Räder (1, 2, 3, 4) des Fahrzeuges (200) bremsschlupfgeregelt ist,
die durch die Radbremsen (5, 6, 7, 8) des Fahrzeuges (200) verursachte Bremswirkung zu ermitteln,
die ausgesteuerten Bremsdrücke (p₁, p₂, p₄) an den Radbremsen (5, 6, 8) der nicht-bremsschlupfgeregelten Räder (1, 2, 4) anzupassen zum Anpassen der verursachten Bremswirkung,
**dadurch gekennzeichnet, dass**
die Verzögerungs-Einrichtung (15) ausgebildet ist, die Bremsdrücke (p₁, p₂, p₄) an den Radbremsen (5, 6, 8) aller nicht-bremsschlupfgeregelten Räder (1, 2, 4) anzupassen, wobei eine durch die Bremsschlupfregelung (ABS) an dem mindestens einen Rad (3) reduzierte Bremswirkung durch die Anpassung der Bremsdrücke (p₁, p₂, p₄) an den Radbremsen (5, 6, 8) aller nicht-bremsschlupfgeregelten Räder (1, 2, 4) ausgleichbar ist.

17. Verzögerungs-Einrichtung (15) nach Anspruch 16, **dadurch gekennzeichnet, dass** die Verzögerungs-Einrichtung (15) weiterhin ausgebildet ist, eine Kurvenfahrt (C) zu erfassen und die Bremsdrücke (p₁, p₂, p₄) der nicht-bremsschlupfgeregelten Radbremsen (5, 6, 8) in Abhängigkeit davon anzupassen, ob die Radbremsen (5, 6, 8) an kurveninneren oder an kurvenäußeren Rädern (1, 2, 4) angeordnet sind.

18. Fahrzeug (200), insbesondere Nutzfahrzeug, mit einer Vorrichtung nach Anspruch 16 oder 17 zur Durchführung eines Verfahrens nach einem der Ansprüche 1 bis 15.

## Claims

1. Method for electronically controlling a vehicle deceleration of a brake slip-controlled vehicle (200), in particular a commercial vehicle, in particular comprising a pneumatic braking system (100), including at least the following steps:
detecting whether at least one of the wheels (1, 2, 3, 4) of the vehicle (200) has a brake slip (BS₁, BS₂, BS₃, BS₄) which exceeds a setpoint brake slip (BS_{Soll}), wherein, in the event that said setpoint brake slip is exceeded, the at least one wheel (3) is brake slip-controlled in order to prevent a lockup of the at least one wheel (3) (St1);
determining a braking effect (St4) caused by wheel brakes (5, 6, 7, 8) on the wheels (1, 2, 3, 4) of the vehicle (200);
adjusting brake pressures (p₁, p₂, _{P4}) output at the wheel brakes (5, 6, 8) of the non-brake slip-controlled wheels (1, 2, 4) in order to adjust the induced braking effect (St5), wherein
the brake pressures (p₁, p₂, p₄) at the wheel brakes (5, 6, 8) of all non-brake slip-controlled wheels (1, 2, 4) are adjusted, wherein the brake pressures (p₁, p₂, p₄) are selected in such a way that a braking effect reduced by the brake slip control at the at least one wheel (3) is compensated for by the adjustment of the brake pressures (p₁, p₂, p₄) on the wheel brakes (5, 6, 8) of all non-brake slip-controlled wheels (1, 2, 4), **characterized in that**
a wheel-specific factor (F₁, F₂, F₄) is applied at each wheel brake (5, 6, 8) of the non-brake slip-controlled wheels (1, 2, 4),
wherein the factor (F; F₁, F₂, F₄) is selected depending on whether cornering (C) is present, wherein the wheel-specific factors (F₁, F₂, F₄) on outer, non-brake slip-controlled wheels (1) is higher than on inner, non-brake slip-controlled wheels (2, 4).

2. Method according to Claim 1, **characterized in that** the braking effect is **characterized by** a brake pressure (p₁, p₂, p₃, p₄) and/or a braking torque (M₁, M₂, M₃, M₄) and/or a braking force (K₁, K₂, K₃, K₄).

3. Method according to Claim 1 or 2, **characterized in that** the brake pressure (p₃) at the wheel brakes (7) of the brake slip-controlled wheel (3) is held or reduced by means of the brake slip control (ABS).

4. Method according to one of Claims 1 to 3, **characterized in that** the brake pressures (p₁, p₂, p₄) at the wheel brakes (5, 6, 8) of the non-brake slip-controlled wheels (1, 2, 4) are selected in such a way that, for a detected setpoint vehicle deceleration (z_{Soll}), a total brake pressure (p^{ABS}_{Sum}) or a total braking force (K^{ABS}_{Sum}) or a total braking torque (M^{ABS}_{Sum}) during active brake slip control approximately corresponds to a total brake pressure (p_{Sum}) or a total braking force (K_{Sum}) or a total braking torque (M_{Sum}) without active brake slip control.

5. Method according to one of the preceding claims, **characterized in that** the adjustment of the brake pressures (p₁, p₂, p₄) at the wheel brakes (5, 6, 8) of all non-brake slip-controlled wheels (1, 2, 4) takes place when cornering (C) is present.

6. Method according to one of the preceding claims, **characterized in that** the brake pressures (p₁, p₂, p₄) at the wheel brakes (5, 6, 8) of the non-brake slip-controlled wheels (1, 2, 4) are adjusted by a factor (F; F₁, F₂, F₄).

7. Method according to Claim 6, **characterized in that** the factors (F; F₁, F₂, F₄) are selected in such a way that the brake pressures (p₁, p₂, p₄) at the wheel brakes (5, 6, 8) of the non-brake slip-controlled wheels (1, 2, 4) increase.

8. Method according to Claim 6 or 7, **characterized in that** the factor (F; F₁, F₂, F₄) is dynamically adjusted (St6) during a braking depending on the response by the vehicle (200) to the adjustment of the brake pressures (p₁, p₂, p₄).

9. Method according to one of the preceding claims, **characterized in that** the factor (F; F₁, F₂, F₄) is selected depending on a transversal acceleration (z_{quer}) of the vehicle (200), wherein the wheel-specific factors (F₁, F₂, F₄) for the non-brake slip-controlled wheels (1, 2, 4), on which a weight (G₁, G₂, G₃, G₄) acts that is higher due to the transversal acceleration (z_{quer}), is set higher than for the non-brake slip-controlled wheels (1, 2, 4), on which a weight (G₁, G₂, G₃, G₄) acts that is lower due to the transversal acceleration (z_{quer}).

10. Method according to one of the preceding claims, **characterized in that** the factor (F; F₁, F₂, F₄) is selected depending on a load (B) of the vehicle (200), wherein the wheel-specific factors (F₁, F₂, F₄) for the non-brake slip-controlled wheels (1, 2, 4), on which a weight (G₁, G₂, G₃, G₄) acts that is higher due to the load (B), is set higher than for the non-brake slip-controlled wheels (1, 2, 4), on which a weight (G₁, G₂, G₃, G₄) acts that is lower due to the load (B) .

11. Method according to one of the preceding claims, **characterized in that** it is determined whether cornering (C) is present via a steering wheel angle sensor (28) and/or a transversal acceleration sensor (17) and/or on the basis of a comparison of the brake slips (BS₁, BS₂, BS₃, BS₄) of the inner and the outer wheels (1, 2, 4) of a vehicle axle (HA, VA).

12. Method according to one of the preceding claims, **characterized in that** a roll stability control (RSC) controlled by an RSC control unit (16) is active during cornering (C) in order to specify a setpoint vehicle deceleration (z_{Soll}) for the additional stabilization of the vehicle (200) during cornering (C).

13. Method according to one of the preceding claims, **characterized in that**, when cornering (C) has been established, the brake pressures (p₁, p₂, p₄) at the wheel brakes (5, 6, 8) of the non-brake slip-controlled wheels (1, 2, 4) are adjusted only if it is established that the brake slip-controlled wheel (3) is not an outer wheel (2, 4).

14. Method according to one of the preceding claims, **characterized in that** the brake pressures (p₁, p₂, p₄) are additionally already adjusted, depending on the detected brake slip (BS₁, BS₂, BS₄) and/or the transversal acceleration (z_{quer}), when the brake slip (BS₁) at one of the non-brake slip-controlled wheels (1) is above a tolerance (BS_{T}), wherein the brake pressures (p₂, p₄) are increased only at the wheel brakes (6, 8) at which the brake slip (BS₂, BS₄) is below the tolerance (BS_{T}) in order to prevent a case of slip at a non-brake slip-controlled wheel (1), as a precaution.

15. Method according to one of the preceding claims, **characterized in that** the vehicle (200) is a single-piece vehicle, in particular a commercial vehicle, for example a truck or a bus, or the vehicle is a two-piece vehicle (200), in particular a commercial vehicle, for example a tractor comprising a semi-trailer, or a truck (200) comprising a trailer (300), wherein the brake pressures (p₁, p₂, p₃, p₄) and the brake slips (BS₁, BS₂, BS₃, BS₄, BS₃₀₃) at the wheel brakes (5, 6, 7, 8) or the wheels (1, 2, 3, 4) of the tractor or the truck (200) and at the wheel brakes or the wheels (301, 302, 303, 304) of the semi-trailer or of the trailer (300) are adjusted and monitored.

16. Deceleration unit (15) for electronically controlling a vehicle deceleration of a brake slip-controlled vehicle (200), in particular a commercial vehicle, comprising a pneumatic brake system (100), for carrying out a method according to one of the preceding claims, wherein the deceleration unit (15) is designed for
detecting whether at least one of the wheels (1, 2, 3, 4) of the vehicle (200) is brake slip-controlled, determining the braking effect caused by the wheel brakes (5, 6, 7, 8) of the vehicle (200),
adjusting the brake pressures (p₁, p₂, p₄) output at the wheel brakes (5, 6, 8) of the non-brake slip-controlled wheels (1, 2, 4) in order to adjust the induced braking effect,
**characterized in that**
the deceleration unit (15) is designed for adjusting the brake pressures (p₁, p₂, p₄) at the wheel brakes (5, 6, 8) of all non-brake slip-controlled wheels (1, 2, 4), wherein a braking effect reduced by the brake slip control (ABS) at the at least one wheel (3) can be compensated for by way of the adjustment of the brake pressures (p₁, p₂, p₄) at the wheel brakes (5, 6, 8) of all non-brake slip-controlled wheels (1, 2, 4).

17. Deceleration unit (15) according to Claim 16, **characterized in that** the deceleration unit (15) is also designed for detecting cornering (C) and adjusting the brake pressures (p₁, p₂, p₄) of the non-brake slip-controlled wheel brakes (5, 6, 8) depending on whether the wheel brakes (5, 6, 8) are disposed on the inner or on the outer wheels (1, 2, 4).

18. Vehicle (200), in particular a commercial vehicle, comprising a device according to Claim 16 or 17 for carrying out a method according to one of Claims 1 to 15.

## Revendications

1. Procédé de régulation électronique d'un ralentissement de véhicule d'un véhicule (200) à régulation du glissement au freinage, notamment d'un véhicule utilitaire, en particulier équipé d'un système de freinage pneumatique (100), comprenant au moins les étapes suivantes :
détection si au moins l'une des roues (1, 2, 3, 4) du véhicule (200) présente un glissement au freinage (BS₁, BS₂, BS₃, BS₄) qui est supérieur à un glissement au freinage de consigne (BS_{Soll}), le glissement au freinage de l'au moins une roue (3) étant régulé dans le cas d'un dépassement afin d'éviter un blocage de l'au moins une roue (3) (St1) ;
détermination d'un effet de freinage provoqué par les freins de roue (5, 6, 7, 8) sur les roues (1, 2, 3, 4) du véhicule (200) (St4) ;
adaptation des pressions de freinage (p₁, p₂, p₄) commandées au niveau des freins de roue (5, 6, 8) des roues (1, 2, 4) sans régulation du glissement au freinage afin d'adapter l'effet de freinage provoqué (St5),
les pressions de freinage (p₁, p₂, p₄) au niveau des freins de roue (5, 6, 8) de toutes les roues (1, 2, 4) sans régulation du glissement au freinage étant adaptées, les pressions de freinage (p₁, p₂, p₄) étant choisies de telle sorte qu'un effet de freinage réduit par la régulation du glissement au freinage au niveau de l'au moins une roue (3) est compensé par l'adaptation des pressions de freinage (p₁, p₂, p₄) au niveau des freins de roue (5, 6, 8) de toutes les roues (1, 2, 4) sans régulation du glissement au freinage, **caractérisé en ce que** un facteur (F₁, F₂, F₄) individuel de roue est appliqué à chaque frein de roue (5, 6, 8) des roues (1, 2, 4) sans régulation du glissement au freinage,
le facteur (F ; F₁, F₂, F₄) étant choisi en fonction de la présence d'une trajectoire en virage (C), les facteurs (F₁, F₂, F₄) individuels de roue au niveau des roues à l'extérieur du virage (1) sans régulation du glissement au freinage étant supérieurs à ceux au niveau des roues à l'intérieur du virage (2, 4) sans régulation du glissement au freinage.

2. Procédé selon la revendication 1, **caractérisé en ce que** l'effet de freinage est **caractérisé par** une pression de freinage (p₁, p₂, p₃, p₄) et/ou un couple de freinage (M₁, M₂, M₃, M₄) et/ou une force de freinage (K₁, K₂, K₃, K₄).

3. Procédé selon la revendication 1 ou 2, **caractérisé en ce que** la pression de freinage (p₃) au niveau des freins de roue (7) de la roue (3) avec régulation du glissement au freinage est maintenue ou réduite par le régulateur de glissement au freinage (ABS).

4. Procédé selon l'une des revendications 1 à 3, **caractérisé en ce que** les pressions de freinage (p₁, p₂, p₄) au niveau des freins de roue (5, 6, 8) des roues (1, 2, 4) sans régulation du glissement au freinage sont choisies de telle sorte que pour un ralentissement de consigne de véhicule (z_{Soll}) détecté, une pression de freinage totale (p^{ABS}_{Sum}) ou une force de freinage totale (K^{ABS}_{Sum}) ou un moment de freinage total (M^{ABS}_{Sum}) avec le régulateur de glissement au freinage activé correspond approximativement à une pression de freinage totale (p_{Sum}) ou une force de freinage totale (K_{Sum}) ou un moment de freinage total (M_{Sum}) sans le régulateur de glissement au freinage activé.

5. Procédé selon l'une des revendications précédentes, **caractérisé en ce que** l'adaptation des pressions de freinage (p₁, p₂, p₄) au niveau des freins de roue (5, 6, 8) de toutes les roues (1, 2, 4) sans régulation du glissement au freinage s'effectue lorsqu'il y a présence d'une trajectoire en virage (C).

6. Procédé selon l'une des revendications précédentes, **caractérisé en ce que** les pressions de freinage (p₁, p₂, p₄) au niveau des freins de roue (5, 6, 8) des roues (1, 2, 4) sans régulation du glissement au freinage sont adaptées par un facteur (F ; F₁, F₂, F₄).

7. Procédé selon la revendication 6, **caractérisé en ce que** les facteurs (F ; F₁, F₂, F₄) sont choisis de telle sorte que les pressions de freinage (p₁, p₂, p₄) au niveau des freins de roue (5, 6, 8) des roues (1, 2, 4) sans régulation du glissement au freinage s'accroissent.

8. Procédé selon la revendication 6 ou 7, **caractérisé en ce que** le facteur (F; F₁, F₂, F₄) est adapté dynamiquement (St6) pendant un freinage en fonction de la réaction du véhicule (200) à l'adaptation des pressions de freinage (p₁, p₂, p₄).

9. Procédé selon l'une des revendications précédentes, **caractérisé en ce que** le facteur (F ; F₁, F₂, F₄) est choisi en fonction d'une accélération transversale (z_{quer}) du véhicule (200), les facteurs (F₁, F₂, F₄) individuels de roue pour les roues (1, 2, 4) sans régulation du glissement au freinage, sur lesquelles agit un poids (G₁, G₂, G₃, G₄) plus élevé en raison de l'accélération transversale (z_{quer}), étant fixés plus haut que pour les roues (1, 2, 4) sans régulation du glissement au freinage, sur lesquelles agit un poids (G₁, G₂, G₃, G₄) plus faible en raison de l'accélération transversale (z_{quer}).

10. Procédé selon l'une des revendications précédentes, **caractérisé en ce que** le facteur (F ; F₁, F₂, F₄) est choisi en fonction d'un chargement (B) du véhicule (200), les facteurs (F₁, F₂, F₄) individuels de roue pour les roues (1, 2, 4) sans régulation du glissement au freinage, sur lesquelles agit un poids (G₁, G₂, G₃, G₄) plus élevé en raison du chargement (B), étant fixés plus haut que pour les roues (1, 2, 4) sans régulation du glissement au freinage, sur lesquelles agit un poids (G₁, G₂, G₃, G₄) plus faible en raison du chargement (B).

11. Procédé selon l'une des revendications précédentes, **caractérisé en ce que** l'identification de la présence d'une trajectoire en virage (C) s'effectue par le biais d'un capteur d'angle de volant de direction (28) et/ou d'un capteur d'accélération transversale (17) et/ou d'une comparaison des glissements au freinage (BS₁, BS₂, BS₃, BS₄) des roues (1, 2, 4) à l'intérieur du virage et à l'extérieur du virage d'un essieu de véhicule (HA, VA).

12. Procédé selon l'une des revendications précédentes, **caractérisé en ce que** pendant la trajectoire en virage (C), un dispositif anti-basculement (RSC) commandé par un dispositif de commande RSC (16) est actif pour prédéfinir un ralentissement de consigne de véhicule (z_{Soll}) afin d'assurer une stabilisation supplémentaire du véhicule (200) pendant la trajectoire en virage (C).

13. Procédé selon l'une des revendications précédentes, **caractérisé en ce que** lorsqu'une trajectoire en virage (C) est constatée, les pressions de freinage (p₁, p₂, p₄) au niveau des freins de roue (5, 6, 8) des roues (1, 2, 4) sans régulation du glissement au freinage ne sont adaptées que s'il est constaté que la roue (3) avec régulation du glissement au freinage n'est pas une roue à l'extérieur du virage (2, 4).

14. Procédé selon l'une des revendications précédentes, **caractérisé en ce que** les pressions de freinage (p₁, p₂, p₄) sont en plus déjà adaptées en fonction du glissement au freinage (BS₁, BS₂, BS₄) et/ou de l'accélération transversale (z_{quer}) détecté lorsque le glissement au freinage (BS₁) au niveau de l'une des roues (1) sans régulation du glissement au freinage se trouve au-dessus d'une tolérance (BS_{T}), les pressions de freinage (p₂, p₄) étant uniquement augmentées au niveau des freins de roue (6, 8) au niveau desquels le glissement au freinage (BS₂, BS₄) est inférieur à la tolérance (BS_{T}) en vue d'empêcher préventivement une situation de glissement au niveau d'une roue (1) sans régulation du glissement au freinage.

15. Procédé selon l'une des revendications précédentes, **caractérisé en ce que** le véhicule (200) est un véhicule en une partie, notamment un véhicule utilitaire, par exemple un camion ou un bus, ou le véhicule est un véhicule (200) en deux parties, notamment un véhicule utilitaire, par exemple un véhicule tracteur avec une semi-remorque ou un camion (200) équipé d'une remorque (300), les pressions de freinage (p₁, p₂, p₃, p₄) et les glissements au freinage (BS₁, BS₂, BS₃, BS₄, BS₃₀₃) étant adaptés ou surveillés aussi bien au niveau des freins de roue (5, 6, 7, 8) ou des roues (1, 2, 3, 4) du véhicule tracteur ou du camion (200) qu'au niveau des freins de roue ou des roues (301, 302, 303, 304) de la semi-remorque ou de la remorque (300).

16. Dispositif de ralentissement (15) destiné à la régulation électronique d'un ralentissement de véhicule d'un véhicule (200) à régulation du glissement au freinage, notamment d'un véhicule utilitaire, équipé d'un système de freinage pneumatique (100), destiné à mettre en œuvre un procédé selon l'une des revendications précédentes, le dispositif de ralentissement (15) étant configuré
pour détecter si au moins l'une des roues (1, 2, 3, 4) du véhicule (200) présente un glissement au freinage, déterminer l'effet de freinage provoqué par les freins de roue (5, 6, 7, 8) du véhicule,
adapter les pressions de freinage (p₁, p₂, p₄) commandées au niveau des freins de roue (5, 6, 8) des roues (1, 2, 4) sans régulation du glissement au freinage afin d'adapter l'effet de freinage provoqué,
**caractérisé en ce que**
le dispositif de ralentissement (15) est configuré pour adapter les pressions de freinage (p₁, p₂, p₄) au niveau des freins de roue (5, 6, 8) de toutes les roues (1, 2, 4) sans régulation du glissement au freinage, un effet de freinage réduit par le régulateur du glissement au freinage (ABS) au niveau de l'au moins une roue (3) pouvant être compensé par l'adaptation des pressions de freinage (p₁, p₂, p₄) au niveau des freins de roue (5, 6, 8) de toutes les roues (1, 2, 4) sans régulation du glissement au freinage.

17. Dispositif de ralentissement (15) selon la revendication 16, **caractérisé en ce que** le dispositif de ralentissement (15) est en outre configuré pour détecter une trajectoire en virage (C) et adapter les pressions de freinage (p₁, p₂, p₄) au niveau des freins de roue (5, 6, 8) des roues (1, 2, 4) sans régulation du glissement au freinage en fonction du fait que les freins de roue (5, 6, 8) sont disposés sur des roues (1, 2, 4) à l'intérieur du virage ou à l'extérieur du virage.

18. Véhicule (200), notamment véhicule utilitaire, comprenant un dispositif selon la revendication 16 ou 17 destiné à mettre en œuvre un procédé selon l'une des revendications 1 à 15.
